# EUROPEAN PATENT SPECIFICATION

(11) **EP 3 113 131 B1**
(45) Date of publication and mention of the grant of the patent: **26.09.2018**
(21) Application number: 16169479.9
(22) Date of filing: 13.05.2016
(51) Int. Cl.: G08B 13/14, G08B 21/02, G08B 21/24

(54) **METHOD AND DEVICE FOR PROVIDING OBJECT FINDING INFORMATION**
VERFAHREN UND VORRICHTUNG ZUR BEREITSTELLUNG VON OBJEKTSUCHINFORMATIONEN
PROCÉDÉ ET DISPOSITIF PERMETTANT DE FOURNIR DES INFORMATIONS DE RECHERCHE D'OBJET

(30) Priority: 01.07.2015 CN 201510378756
(43) Date of publication of application: 04.01.2017
(73) Proprietor: Xiaomi Inc., Beijing 100085 (CN)
(72) Inventor: TANG, Mingyong, 100085 BEIJING (CN); CHEN, Tao, 100085 BEIJING (CN); LIU, Huayijun, 100085 BEIJING (CN)
(74) Representative: Cougard, Jean-Marie

(56) References cited:
- CN-U- 201 830 255
- CN-U- 203 912 041
- JP-A- 2000 287 265
- US-A1- 2008 291 031
- US-A1- 2011 175 722

## Description

### TECHNICAL FIELD

The present disclosure generally relates to the field of electronic technology, and more particularly, to a method and device for providing object finding information.

### BACKGROUND

With development of electronic technologies, various electronic devices emerge, and accordingly electronic devices may realize increasingly rich functions. For example, an electronic device having a loss prevention function can provide relevant information for finding a missing personal item back. The electronic device having a loss prevention function may be a loss preventer or a mobile phone, and the like.

The relevant information (referred to hereinafter as "object finding information") provided by the electronic device having the loss prevention function for finding a missing personal item back is usually location information. Taking a loss preventer as an example, a common method for providing object finding information is as follows. The loss preventer is attached onto a personal item, the loss preventer can locate the personal item and upload the location information so that the owner of the personal item can find the personal item back according to the location information uploaded by the loss preventer.

The Applicant has identified at least the following issues with respect to the conventional electronic devices having the loss prevention function.

Based on the above method for providing object finding information, after a personal item is stolen, if the loss preventer is broken, the loss preventer cannot locate the personal item or upload the location information any more, and thus the location information cannot be retrieved once the loss preventer is broken. The location information provided before the loss preventer is broken is of less value for finding the lost personal item back. Consequently, the effectiveness for providing object finding information is relatively poor.

CN201830255U discloses a Bluetooth loss preventer to detect the potential loss of a mobile phone.

### SUMMARY

In order to address the problems existing in related arts, the present disclosure provides a method and a device for providing object finding information. The technical solutions are as follows.

According to a first aspect of embodiments of the present disclosure, there is provided a method for providing object finding information comprising:
when detecting, by an electronic device attached onto an object and used for detecting the occurrence of preset loss events, that a preset loss event occurs, detecting by the electronic device device-relevant information of a surrounding device around a location of the electronic device; and
sending, by the electronic device the detected device-relevant information of the surrounding device to a first preset device as object finding information.

In a particular embodiment, when detecting that a preset loss event occurs, said detecting device-relevant information of a surrounding device around the location of the electronic device includes:
when detecting that the location of the electronic device goes beyond a first preset location range, detecting the device-relevant information of the surrounding device around the location of the electronic device; or
when detecting that a distance between the electronic device and a second preset device exceeds a first preset distance threshold, detecting the device-relevant information of the surrounding device around the location of the electronic device; or
when detecting that screen-unlocking information input by a user does not match preset screen-unlocking reference information, detecting the device-relevant information of the surrounding device around the location of the electronic device; or
when receiving a shut-down instruction, detecting the device-relevant information of the surrounding device around the location of the electronic device.

In a particular embodiment, the detecting the device-relevant information of the surrounding device around the location of the electronic device includes:
continuously detecting the device-relevant information of the surrounding device around the location of the electronic device in a preset detecting period.

In a particular embodiment, the sending the detected device-relevant information of the surrounding device to a first preset device as object finding information includes:
sending the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

In a particular embodiment, the sending the detected device-relevant information of the surrounding device to a first preset device as object finding information includes:
when detecting a preset reporting trigger event, sending the detected device-relevant information of the surrounding device to the first preset device as the object finding information.

In a particular embodiment, when detecting a preset reporting trigger event, said sending the detected device-relevant information of the surrounding device to the first preset device as the object finding information, includes:
when detecting that a self-location goes beyond a second preset location range, sending the detected device-relevant information of the surrounding device to the first preset device as the object finding information; or
when detecting that a distance between the electronic device and a second preset device exceeds a second preset distance threshold, sending the detected device-relevant information of the surrounding device to the first preset device as the object finding information; or
when first device-relevant information is continuously detected within a preset time period, sending the first device-relevant information to the first preset device as the object finding information.

In a particular embodiment, when detecting that a preset loss event occurs, said detecting device-relevant information of a surrounding device around the location of the electronic device, includes:
when receiving a flashing instruction, detecting the device-relevant information of the surrounding device around the location of the electronic device;
wherein after detecting the device-relevant information of the surrounding device around the location of the electronic device, the method further includes:
   sending the detected device-relevant information of the surrounding device and information indicating a stolen state of the electronic device to a server as flashing preserving information; and
   after flashing is completed, obtaining the flashing preserving information from the server, and when determining that the flashing preserving information includes the information indicating the stolen state of electronic device, detecting the device-relevant information of the surrounding device around the location of the electronic device again;
   wherein the sending the detected device-relevant information of the surrounding device to a first preset device as object finding information, includes:
      if both the device-relevant information of the surrounding device detected before the flashing and the device-relevant information of the surrounding device detected after the flashing include the same second device-relevant information, sending the second device-relevant information to the first preset device as the object finding information.

In a particular embodiment, the sending the detected device-relevant information of the surrounding device to a first preset device as object finding information includes:
sending the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

In a particular embodiment, the device-relevant information of the surrounding device includes one or more of:
a network identity of a wireless local area network established by the surrounding device, a MAC address of the surrounding device, a Bluetooth identity of the surrounding device, and a login-in account of an instant messaging application in the surrounding device.

In a particular embodiment, the steps of the method for providing object finding information are determined by computer program instructions.

Consequently, according to a fourth aspect, the invention is also directed to a computer program for executing the steps of a method for providing object finding information as defined above when this program is run by a computer.

This program can use any programming language and take the form of source code, object code or a code intermediate between source code and object code, such as a partially compiled form, or any other desirable form.

According to a second aspect of embodiments of the present disclosure, there is provided an electronic device for providing object finding information, the electronic device being attachable onto an object to detect the occurrence of preset loss events, comprising:
a detecting module configured to detect the occurrence of a preset loss event and to detect device-relevant information of a surrounding device around a location of the electronic device when it is detected that a preset loss event occurs; and
a sending module configured to send the detected device-relevant information of the surrounding device to a first preset device as object finding information.

In a particular embodiment, the detecting module is configured to:
when it is detected that the location of the electronic device goes beyond a first preset location range, detect the device-relevant information of the surrounding device around the location of the electronic device; or
when it is detected that a distance between the electronic device and a second preset device exceeds a first preset distance threshold, detect the device-relevant information of the surrounding device around the location of the electronic device; or
when it is detected that screen-unlocking information input by a user does not match preset screen-unlocking reference information, detect the device-relevant information of the surrounding device around the location of the electronic device; or
when a shut-down instruction is received, detect the device-relevant information of the surrounding device around the location of the electronic device.

In a particular embodiment, the detecting module is configured to:
continuously detect the device-relevant information of the surrounding device around the location of the electronic device in a preset detecting period.

In a particular embodiment, the sending module is configured to:
send the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

In a particular embodiment, the sending module is configured to:
when a preset reporting trigger event is detected, send the detected device-relevant information of the surrounding device to the first preset device as the object finding information.

In a particular embodiment, the sending module is configured to:
when it is detected that a self-location goes beyond a second preset location range, send the detected device-relevant information of the surrounding device to the first preset device as the object finding information; or
when it is detected that a distance between electronic device and a second preset device exceeds a second preset distance threshold, send the detected device-relevant information of the surrounding device to the first preset device as the object finding information; or
when first device-relevant information is continuously detected within a preset time period, send the first device-relevant information to the first preset device as the object finding information.

In a particular embodiment, the detecting module is configured to, when a flashing instruction is received, detect the device-relevant information of the surrounding device around the location of the electronic device;
the sending module is further configured to, after the device-relevant information of the surrounding device around the location of the electronic device is detected, send the detected device-relevant information of the surrounding device and information indicating a stolen state of electronic device to a server as flashing preserving information;
the detecting module is further configured to, after flashing is completed, obtain the flashing preserving information from the server, and when it is determined that the flashing preserving information includes the information indicating the stolen state of electronic device, detect the device-relevant information of the surrounding device around the location of the electronic device again; and
the sending module is configured to, if both the device-relevant information of the surrounding device detected before the flashing and the device-relevant information of the surrounding device detected after the flashing include the same second device-relevant information, send the second device-relevant information to the first preset device as the object finding information.

In a particular embodiment, the sending module is configured to:
send the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

In a particular embodiment, the device-relevant information of the surrounding device includes one or more of:
a network identity of a wireless local area network established by the surrounding device, a MAC address of the surrounding device, a Bluetooth identity of the surrounding device, and a login-in account of an instant messaging application in the surrounding device.

According to a third aspect of embodiments of the present disclosure, there is provided a device for providing object finding information, applied in an electronic device and including:
a processor; and
a memory for storing instructions executable by the processor;
wherein the processor is configured to:
   when it is detected that a preset loss event occurs, detect device-relevant information of a surrounding device around a location of the electronic device; and
   send the detected device-relevant information of the surrounding device to a first preset device as object finding information.

According to a fourth aspect of embodiments of the present disclosure, there is provided a computer program, which when executing on a processor, performs a method according to the first aspect.

The technical solutions of the present disclosure may have the following advantageous effects.

In embodiments of the present disclosure, when detecting that a preset loss event occurs, device-relevant information of a surrounding device around a location of the electronic device is detected, and the detected device-relevant information of the surrounding device is sent to a first preset device as object finding information. The object finding information reported by an electronic device having a loss prevention function is not the location information of the electronic device, and thus even if the electronic device is broken, the owner may still find the lost object back according to the reported device-relevant information of a surrounding device. Consequently, the effectiveness of the provided object finding information is improved.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for providing object finding information according to an exemplary embodiment.
Fig. 2 is a schematic diagram showing acquiring of device-relevant information according to an exemplary embodiment.
Fig. 3 is a schematic diagram showing an application scenario according to an exemplary embodiment.
Fig. 4 is a schematic diagram showing an application scenario according to an exemplary embodiment.
Fig. 5 is a block diagram showing a device for providing object finding information according to an exemplary embodiment.
Fig. 6 is a block diagram showing a structure of an electronic device according to an exemplary embodiment.

The specific embodiments of the present disclosure are presented above by the above drawings, and detailed description will be made below. These drawings and literal descriptions are not for limiting the scope of the design of the present disclosure in any way but for illustrating the conception of the present disclosure to one of ordinary skill in this art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

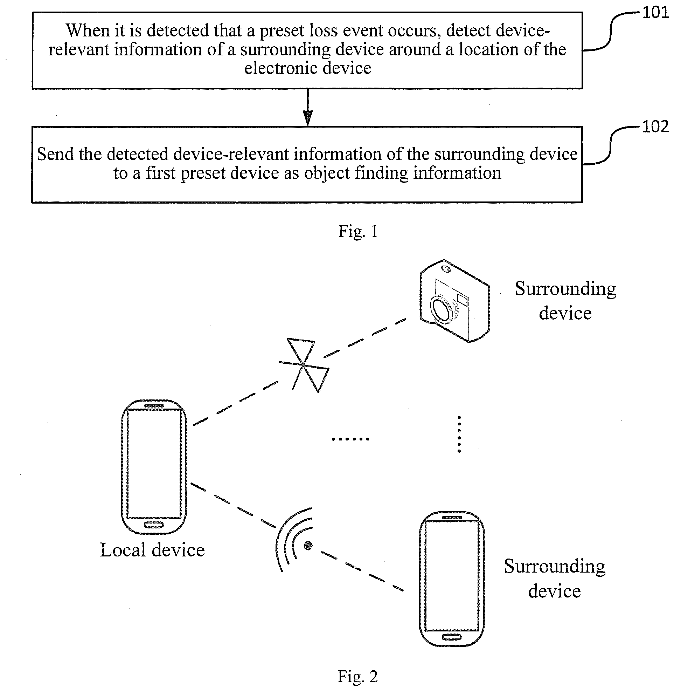

An exemplary embodiment of the present disclosure provides a method for providing object finding information. As shown in Fig. 1, the method is applied in an electronic device (such as a mobile terminal), and the process flow of this method includes the following steps.

In step 101, when it is detected that a preset loss event occurs, device-relevant information of a surrounding device around (in the vicinity of) a location of the electronic device is detected.

The device-relevant information may include any appropriate information relative to the surrounding device.

In step 102, the detected device-relevant information of the surrounding device is sent to a first preset device as object finding information. The object finding information provided by the electronic device is for finding a missing personal item back.

In the embodiment of the present disclosure, when it is detected that a preset loss event occurs, device-relevant information of a surrounding device around a location of the electronic device is detected; and the detected device-relevant information of the surrounding device is sent to a first preset device as the object finding information. The object finding information reported by an electronic device having a loss prevention function is not the location information of the electronic device itself, and thus even if the electronic device is broken (especially if the electronic is no longer in a capacity to provide information about its location), the owner may still find the lost object back according to the reported device-relevant information of a surrounding device. Consequently, the effectiveness of the provided object finding information is improved.

Another exemplary embodiment of the present disclosure provides a method for providing object finding information. The method may be applied in an electronic device having a loss prevention function (hereinafter referred to as "local device"). The electronic device may be mobile terminals such as a mobile phone, a tablet computer and the like, or may be a loss preventer. The local device can be provided with a processor for processing detected unusual events as mentioned below, a memory for storing data as required in the following processing and resulted data, and a transceiver for receiving and sending data.

The process flow as shown in Fig. 1 will be described in detail below with reference to specific embodiments.

In step 101, when it is detected that a preset loss event occurs, device-relevant information of a surrounding device around a location of the electronic device is detected.

In a particular implementation, a user may install an application having an object finding function in the local device, and attach the local device onto a corresponding object (for example, a personal item or a child). Thus, if the personal item or the child is lost, the user may obtain the object finding information. At this time, the local device may realize the function for providing object finding information to find the object. The user may attach the local device onto a corresponding item or a person according to actual requirements, for example, the local device may be attached onto a bike, a pet or a child.

The local device may preset loss events of the object which is attached together with the local device. When it is detected that the loss event occurs, device-relevant information of a surrounding device around the local device may be detected. For example, electronic devices having a capability of accessing a wireless network nearby the local device may be detected, for example, a mobile phone, or a vehicle chip.

In a particular embodiment, the device-relevant information of the surrounding device may include any one or more of: a network identity of a wireless local area network established by the surrounding device, a Media Access Control (MAC) address of the surrounding device, a Bluetooth identity of the surrounding device, and a login-in account of an instant messaging application in the surrounding device, and the like.

In implementation, as shown in Fig. 2, the local device may have a capability of accessing a wireless network, for example, a Wireless Fidelity (WIFI) function, and may obtain a network identity of a wireless local area network established by the surrounding device. The local device may obtain the MAC address of the surrounding device. The local device may have parts with Bluetooth function, and may obtain the Bluetooth identity of the surrounding device via the parts with Bluetooth function. The Bluetooth identity may be the MAC address of the parts with Bluetooth function, or may be the Bluetooth name used by the Bluetooth connection. The local device may obtain a current login-in account of an instant messaging application installed in the surrounding device by the function for searching nearby friends in the instant messaging application installed in the local device.

In a particular embodiment, the local device may preset a trigger event for triggering obtaining of the information relevant to the surrounding device. Accordingly, the process flow of step 101 may be as follows.

In a first case, when it is detected that the location of the electronic device goes beyond (is out of) a first preset location range, the device-relevant information of the surrounding device around the location of the electronic device is detected.

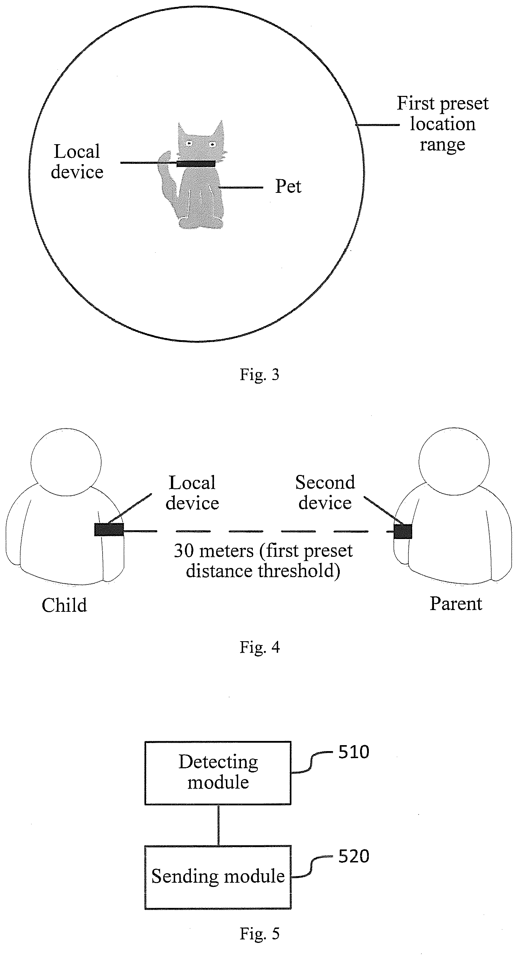

In a particular implementation, the local device may continuously detect the location information of itself using a positioning system installed in the local device. The local device may preset a location range (referred to as "first preset location range"). When the local device detects that the location of the local device itself goes beyond the first preset location range, the local device may detect the device-relevant information of the surrounding device. For example, as shown in Fig. 3, the local device may be a neck ring which may be attached onto a pet by a user. When the pet goes beyond the preset location range, the local device may detect the device-relevant information of a surrounding device, for example, a network identity of a wireless local area network.

In a particular embodiment, when it is detected that a distance between the electronic device itself and a second preset device exceeds a first preset distance threshold, the device-relevant information of the surrounding device around the location of the electronic device is detected.

In a particular embodiment, the local device may preset a threshold (hereinafter referred to as "first preset distance threshold") for a distance between the local device itself and a second device (which may be the first device). When the local device detects that the distance from the local device itself to the second device exceeds the first preset distance threshold, the local device may detect the device-relevant information of the surrounding device. For example, as shown in Fig. 4, the local device may be attached onto a child, and the local device may preset the distance threshold between the local device itself and a second device of a parent of the child as 30 meters. When the local device detects that the distance between the local device and the second device of the parent exceeds 30 meters, the local device may detect the device-relevant information of a device around the local device (i.e., around the child).

In a particular embodiment, when it is detected that screen-unlocking information input by a user does not match preset screen-unlocking reference information, the device-relevant information of the surrounding device around the location of the electronic device is detected.

In implementation, the local device may preset screen-unlocking reference information which may be a password for unlocking the screen. When a user wants to use the local device and unlock the screen of the local device, if the input screen-unlocking information by the user does not match the preset screen-unlocking reference information, the local device may detect the device-relevant information of the surrounding device around the local device itself.

In a particular embodiment, when a shut-down instruction is received, the device-relevant information of the surrounding device around the location of the electronic device is detected.

In a particular embodiment, if a thief steals the local device, the thief will usually shut down the local device. The local device may be configured such that if the shutdown instruction is received, the local device can detect the device-relevant information of the surrounding device around the local device itself.

In a particular embodiment, if the local device is attached onto an object which is locked by a user with a lock, the local device may monitor the locking state of the lock protecting the object. When the local device detects that the lock is not open but the object moves and the moving distance exceeds a preset distance threshold, the local device may detect the device-relevant information of the surrounding device around the local device itself. For example, a bike is locked with a lock. If the bike is stolen by a thief, the local device may detect that the lock is not open but the bike moves, and the local device may detect the device-relevant information of the surrounding device around the local device itself.

In a particular embodiment, when the local device receives a flashing instruction, the local device may detect the device-relevant information of the surrounding device around the location of the local device. Then the following process may be performed: sending the detected device-relevant information of the surrounding device and information indicating a stolen state of itself to a server as flashing preserving information; and after flashing is completed, obtaining the flashing preserving information from the server, and when determining that the flashing preserving information includes the information indicating the stolen state of itself, detecting the device-relevant information of the surrounding device around the location of the electronic device again.

In a particular embodiment, if the local device is lost, the thief or the person who picks up the local device may perform a flashing (or brushing) operation on the local device, and the local device can receive the flashing instruction. At this time, the local device may be triggered to detect the device-relevant information of the surrounding device around location of the local device itself. If the local device determines that the object is stolen, the local device records the stolen state, and sends, in accordance with pre-stored server address, the detected device-relevant information of the surrounding device and the information indicating the stolen state of itself to the server as the flashing preserving information. After the flashing operation is completed, the local device may receive an instruction indicating the completion of the flashing, and at this time, the local device may be triggered to generate a request for acquiring the flashing preserving information, and send the request for acquiring the flashing preserving information to the server according to the pre-stored server address. The server may receive the acquiring request sent from the local device, and send the local device the flashing preserving information sent from the local device when the local device receives the flashing instruction. The local device may receive and parse the flashing preserving information sent from the server, and obtain the information indicating the stolen state of the local device itself carried in the flashing preserving information. If the local device determines that the local device itself is stolen, the local device detects the device-relevant information of the surrounding device around the location of the local device itself again. The device-relevant information of the surrounding device detected before or after the flashing operation may be used for subsequent comparison and determination to determine the device-relevant information which needs to be reported.

In a particular embodiment, when the loss event occurs, the local device may continuously detect the device-relevant information of the surrounding device. Accordingly, the process flow may be as follows: the local device continuously detects the device-relevant information of the surrounding device around the location of the local device in a preset detecting period.

In a particular embodiment, the local device may preset a detecting period of time. When the loss event occurs, the local device may continuously detect the device-relevant information of the surrounding device in the preset detecting period.

In step 102, the detected device-relevant information of the surrounding device is sent to a first preset device as object finding information.

The first device may be a certain designated server, or may be an electronic device carried by a user, for example, a mobile terminal such as a mobile phone.

In a particular embodiment, after detecting the device-relevant information of the surrounding device, the local device directly sends the device-relevant information to the first preset device as the object finding information.

In a particular embodiment, the local device may send the detected device-relevant information to the server, the server may obtain some other valuable information based on the device-relevant information and then send the obtained information to the first device. Accordingly, the process flow of the server varies, and the following are some examples of possible processes.

In a first approach, a moving route may be determined. The corresponding process flow may be as follows: sending the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

In a particular embodiment, according to the pre-stored server address, the local device sends the device-relevant information of the surrounding device detected periodically to the server as the object finding information, the server may receive the device-relevant information of the surrounding device which may be network identity of a wireless local area network established by the surrounding device. The local device in which the application is installed may send the obtained device-relevant information and the location information of the device corresponding to the device-relevant information to the server. The server may pre-store a correspondence between device-relevant information and location information of corresponding device. After receiving the object finding information sent from the local device, the server may obtain the location information of each surrounding device sent from the local device according to the above pre-stored correspondence in the server, then the server may determine the moving route of the local device (i.e., the object) according to the obtained location information of the surrounding device, and send the moving route to the first preset device which may be a mobile terminal carried by the user such as a mobile phone.

In a second approach, an image captured by a camera along the moving route may be obtained. The corresponding process flow may be as follows: sending the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

In a particular embodiment, after the loss event occurs, the local device may continuously detect the device-relevant information of the surrounding device, and according to the pre-stored server address, the local device may send the detected device-relevant information of the surrounding device and information on corresponding detecting time (at this time, the device-relevant information of the surrounding device and the information on the detecting time may be referred to as the object finding information) to the server. The server receives the object finding information (which may be the network identities of wireless local area networks established by surrounding devices along the moving route and corresponding detecting times) sent from the local device, and parses the object finding information. The local device in which the application is installed may send the detected device-relevant information and the location information of the device corresponding to the device-relevant information to the server. The server may pre-store a correspondence between device-relevant information and location information of corresponding devices. After receiving the object finding information sent from the local device, the server may obtain the location information of each surrounding device sent from the local device according to the above pre-stored correspondence in the server. Then, according to the obtained location information of the surrounding device(s), the server may obtain images captured by cameras at corresponding locations from traffic monitoring servers, community monitoring servers or building monitoring servers. Then, according to the information on the detecting time in the object finding information, the server may obtain the image captured at the time by the camera, and this image may include the image information of the suspect. The server can send the image information to the first preset device which may be mobile terminals carried by a user such as a mobile phone and the like. For example, if a pet is stolen, the local device may obtain network identities of wireless local area networks and time points when obtaining is performed along the way, and send the information to the server as the object finding information. With such reporting along the way from the local device, the server may obtain the location of the network identity of each wireless local area network, and then the server may obtain the images captured by corresponding cameras along the way according to the location information and the time points, and send the obtained images to the first preset device.

In a particular embodiment, a reporting trigger event may be set for the reporting process. Accordingly, the process flow of step 102 may be as follows: when detecting a preset reporting trigger event, sending the detected device-relevant information of the surrounding device to the first preset device as the object finding information.

In a particular embodiment, a reporting trigger event may be preset in the local device. When detecting that the preset reporting trigger event occurs, the local device may send the detected device-relevant information of the surrounding device to the first preset device as the object finding information.

In a particular embodiment, if the reporting trigger event is set, the process flow may be as follows. In a first case, when it is detected that a self-location goes beyond a second preset location range, the detected device-relevant information of the surrounding device is sent to the first preset device as the object finding information. In a second case, when it is detected that a distance between itself and a second preset device exceeds a second preset distance threshold, the detected device-relevant information of the surrounding device is sent to the first preset device as the object finding information. In a third case, when first device-relevant information is continuously detected within a preset time period, the first device-relevant information is sent to the first preset device as the object finding information.

In a particular embodiment, a trigger event for triggering reporting of the detected device information of the surrounding device (i.e., the object finding information) may be preset in the local device. That is to say, the local device may preset a reporting trigger event.

In a first case, the local device may continuously detect the location information of the local device itself using the positioning system of itself (for example, the global positioning system). When the local device detects that the location of the local device itself goes beyond a preset location range (referred to as "second preset location range"), the local device may send the detected device-relevant information of the surrounding device to the first preset device as the object finding information.

In a second case, a threshold (referred to as "second preset distance threshold") for a distance between the local device itself and a second device may be preset in the local device. When the local device detects that the distance between the local device itself and the second device exceeds the second preset distance threshold, the local device may send the detected device-relevant information of the surrounding device to the first preset device as the object finding information. For example, the local device may preset the distance threshold between a local device attached onto a pet and an electronic device of an owner of this pet as 20 meters. When the local device detects that the distance between the pet and the electronic device of its owner exceeds the distance threshold (i.e., 20 meters), the local device may report the detected device-relevant information of the devices around the local device itself (i.e., around the pet).

In a third case, if the local device continuously detects the device-relevant information (referred to as "first device-relevant information") of the surrounding device within a preset time period, the local device sends the first device-relevant information to the first preset device as the object finding information. For example, if a bike is stolen, the mobile phone of the thief will move together with the local device, and at this time, the local device can continuously detect out the information (e.g., the Bluetooth identity of the mobile phone) relevant to the mobile phone of the thief within a preset time period, for example, one second. Then, the local device can send the information to the first preset device as the object finding information. Thus, even if the local device is broken, the first device can find the lost bike back according to the obtained first device-relevant information.

In a particular embodiment, if the local device is flashed, the process flow of step 102 is as follows: if both the device-relevant information of the surrounding device detected before the flashing and the device-relevant information of the surrounding device detected after the flashing include the same second device-relevant information, sending the second device-relevant information to the first preset device as the object finding information.

In a particular embodiment, after detecting the device-relevant information of the surrounding device again, the local device compares the device-relevant information with the device-relevant information in the flashing preserving information obtained from the server; if the both device-relevant information include the same device-relevant information (referred to as "second device-relevant information"), the local device can send the second device-relevant information to the first preset device as the object finding information.

In particular embodiments of the present disclosure, when it is detected that a preset loss event occurs, device-relevant information of a surrounding device around a location is detected; and the detected device-relevant information of the surrounding device is sent to a first preset device as the object finding information. The object finding information reported by an electronic device having a loss prevention function is not the location information of the electronic device itself, and thus even if the electronic device is broken, the owner may still find the lost object back according to the reported device-relevant information of a surrounding device. Consequently, the effectiveness of the provided object finding information is improved.

Another exemplary embodiment of the present disclosure provides a device for providing object finding information. As shown in Fig. 5, the device is applied in an electronic device and includes a detecting module 510 and a sending module 520.

The detecting module 510 is configured to, when it is detected that a preset loss event occurs, detect device-relevant information of a surrounding device around a location of the electronic device.

The sending module 520 is configured to send the detected device-relevant information of the surrounding device to a first preset device as object finding information.

In a particular embodiment, the detecting module 510 is configured to:
when it is detected that the location of the electronic device goes beyond (is out of) a first preset location range, detect the device-relevant information of the surrounding device around the location of the electronic device; or
when it is detected that a distance between the electronic device itself and a second preset device exceeds a first preset distance threshold, detect the device-relevant information of the surrounding device around the location of the electronic device; or
when it is detected that screen-unlocking information input by a user does not match preset screen-unlocking reference information, detect the device-relevant information of the surrounding device around the location of the electronic device; or
when a shut-down instruction is received, detect the device-relevant information of the surrounding device around the location of the electronic device.

In a particular embodiment, the detecting module 510 is configured to:
continuously detect the device-relevant information of the surrounding device around the location of the electronic device in a preset detecting period.

In a particular embodiment, the sending module 520 is configured to:
send the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

In a particular embodiment, the sending module 520 is configured to:
when a preset reporting trigger event is detected, send the detected device-relevant information of the surrounding device to the first preset device as the object finding information.

In a particular embodiment, the sending module 520 is configured to:
when it is detected that a self-location goes beyond a second preset location range, send the detected device-relevant information of the surrounding device to the first preset device as the object finding information; or
when it is detected that a distance between itself and a second preset device exceeds a second preset distance threshold, send the detected device-relevant information of the surrounding device to the first preset device as the object finding information; or
when first device-relevant information is continuously detected within a preset time period, send the first device-relevant information to the first preset device as the object finding information.

In a particular embodiment, the detecting module 510 is configured to, when a flashing instruction is received, detect the device-relevant information of the surrounding device around the location of the electronic device.

The sending module 520 is further configured to, after the device-relevant information of the surrounding device around the location of the electronic device is detected, send the detected device-relevant information of the surrounding device and information indicating a stolen state of itself to a server as flashing preserving information.

The detecting module 510 is further configured to, after flashing is completed, obtain the flashing preserving information from the server, and when it is determined that the flashing preserving information includes the information indicating the stolen state of itself, detect the device-relevant information of the surrounding device around the location of the electronic device again.

The sending module 520 is configured to, if both the device-relevant information of the surrounding device detected before the flashing and the device-relevant information of the surrounding device detected after the flashing include the same second device-relevant information, send the second device-relevant information to the first preset device as the object finding information.

In a particular embodiment, the sending module 520 is configured to:
send the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

In a particular embodiment, the device-relevant information of the surrounding device includes one or more of:
a network identity of a wireless local area network established by the surrounding device, a MAC address of the surrounding device, a Bluetooth identity of the surrounding device, and a login-in account of an instant messaging application in the surrounding device.

With respect to the devices in the above embodiments, the specific manners for performing operations for individual modules therein have been described in detail in the embodiments regarding the methods, which will not be elaborated herein.

In the embodiments of the present disclosure, when it is detected that a preset loss event occurs, device-relevant information of a surrounding device around a location is detected; and the detected device-relevant information of the surrounding device is sent to a first preset device as the object finding information. The object finding information reported by an electronic device having a loss prevention function is not the location information of the electronic device itself, and thus even if the electronic device is broken, the owner may still find the lost object back according to the reported device-relevant information of a surrounding device. Consequently, the effectiveness of the provided object finding information is improved.

It shall be noted that providing of object finding information is performed by the function modules as divided in the above embodiments for example. However, in actual application, the above functions may be designated to varied function modules to complete, i.e., the internal structures of the device may be divided into different function modules to complete all or a part of the above functions. In addition, the device and method for providing object finding information in the above embodiments belong to the same conception, and thus for detailed implementations, refer to the above embodiments of the methods, and repeated descriptions are omitted here.

Another exemplary embodiment of the present disclosure provides a block diagram of a structure of an electronic device which may be a mobile phone and the like.

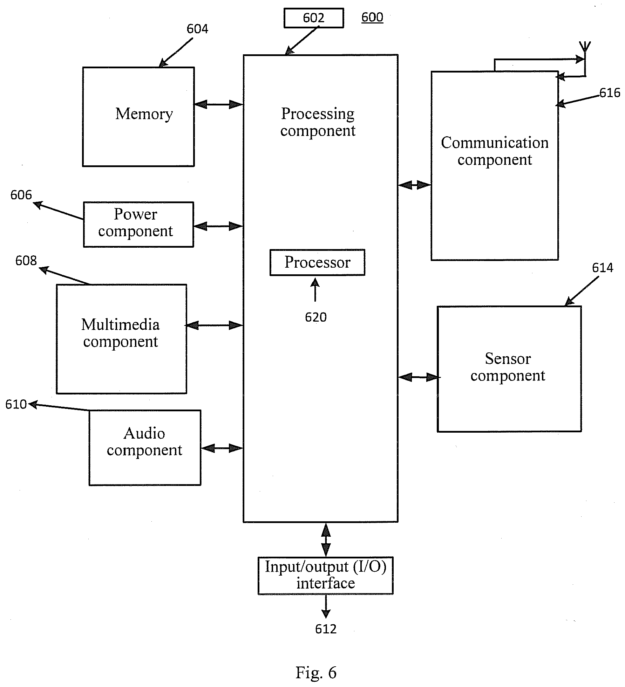

Referring to Fig. 6, the electronic device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the electronic device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the electronic device 600. Examples of such data include instructions for any applications or methods operated on the electronic device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the electronic device 600. The power component 606 may include a power management system, one or more power sources, and any other components associated with the generation, management, and distribution of power in the device 600.

The multimedia component 608 includes a screen providing an output interface between the electronic device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the electronic device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the electronic device 600 is in an operation mode, such as a call mode, a recording mode, and a voice recognition mode. The received audio signal may be further stored in the memory 604 or transmitted via the communication component 616.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the electronic device 600. For instance, the sensor component 614 may detect an open/closed status of the electronic device 600, relative positioning of components, e.g., the display and the keypad, of the electronic device 600, a change in position of the electronic device 600 or a component of the electronic device 600, a presence or absence of user contact with the electronic device 600, an orientation or an acceleration/deceleration of the electronic device 600, and a change in temperature of the electronic device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the electronic device 600 and other devices. The electronic device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the electronic device 600, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium having stored therein instructions that, when executed by a processor of an electronic device, cause the electronic device to perform a method for providing object finding information, the method applied in an electronic device and including:
when detecting that a preset loss event occurs, detecting device-relevant information of a surrounding device around a location of the electronic device; and
sending the detected device-relevant information of the surrounding device to a first preset device as object finding information.

In a particular embodiment, when detecting that a preset loss event occurs, detecting device-relevant information of a surrounding device around the location of the electronic device, includes:
when detecting that the location of the electronic device goes beyond a first preset location range, detecting the device-relevant information of the surrounding device around the location of the electronic device; or
when detecting that a distance between the electronic device itself and a second preset device exceeds a first preset distance threshold, detecting the device-relevant information of the surrounding device around the location of the electronic device; or
when detecting that screen-unlocking information input by a user does not match preset screen-unlocking reference information, detecting the device-relevant information of the surrounding device around the location of the electronic device; or
when receiving a shut-down instruction, detecting the device-relevant information of the surrounding device around the location of the electronic device.

In a particular embodiment, the detecting the device-relevant information of the surrounding device around the location of the electronic device includes:
continuously detecting the device-relevant information of the surrounding device around the location of the electronic device in a preset detecting period.

In a particular embodiment, the sending the detected device-relevant information of the surrounding device to a first preset device as object finding information includes:
sending the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

In a particular embodiment, the sending the detected device-relevant information of the surrounding device to a first preset device as object finding information includes:
when detecting a preset reporting trigger event, sending the detected device-relevant information of the surrounding device to the first preset device as the object finding information.

In a particular embodiment, when detecting a preset reporting trigger event, sending the detected device-relevant information of the surrounding device to the first preset device as the object finding information, includes:
when detecting that a self-location goes beyond a second preset location range, sending the detected device-relevant information of the surrounding device to the first preset device as the object finding information; or
when detecting that a distance between itself and a second preset device exceeds a second preset distance threshold, sending the detected device-relevant information of the surrounding device to the first preset device as the object finding information; or
when first device-relevant information is continuously detected within a preset time period, sending the first device-relevant information to the first preset device as the object finding information.

In a particular embodiment, when detecting that a preset loss event occurs, detecting device-relevant information of a surrounding device around the location of the electronic device, includes:
when receiving a flashing instruction, detecting the device-relevant information of the surrounding device around the location of the electronic device;
wherein after detecting the device-relevant information of the surrounding device around the location of the electronic device, the method further includes:
   sending the detected device-relevant information of the surrounding device and information indicating a stolen state of itself to a server as flashing preserving information; and
   after flashing is completed, obtaining the flashing preserving information from the server, and when determining that the flashing preserving information includes the information indicating the stolen state of itself, detecting the device-relevant information of the surrounding device around the location of the electronic device again;
   wherein the sending the detected device-relevant information of the surrounding device to a first preset device as object finding information, includes:
      if both the device-relevant information of the surrounding device detected before the flashing and the device-relevant information of the surrounding device detected after the flashing include the same second device-relevant information, sending the second device-relevant information to the first preset device as the object finding information.

In a particular embodiment, the sending the detected device-relevant information of the surrounding device to a first preset device as object finding information includes:
sending the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

In a particular embodiment, the device-relevant information of the surrounding device includes one or more of:
a network identity of a wireless local area network established by the surrounding device, a MAC address of the surrounding device, a Bluetooth identity of the surrounding device, and a login-in account of an instant messaging application in the surrounding device.

In embodiments of the present disclosure, when it is detected that a preset loss event occurs, device-relevant information of a surrounding device around a location is detected; and the detected device-relevant information of the surrounding device is sent to a first preset device as the object finding information. The object finding information reported by an electronic device having a loss prevention function is not the location information of the electronic device itself, and thus even if the electronic device is broken, the owner may still find the lost object back according to the reported device-relevant information of a surrounding device. Consequently, the effectiveness of the provided object finding information is improved.

It will be appreciated that the present invention is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for providing object finding information, comprising:
when detecting, by an electronic device attached onto an object and used for detecting the occurrence of preset loss events, that a preset loss event occurs, detecting (101) by the electronic device device-relevant information of a surrounding device around a location of the electronic device; and
sending (102) by the electronic device the detected device-relevant information of the surrounding device to a first preset device as object finding information.

2. The method according to claim 1, wherein when detecting that a preset loss event occurs, said detecting (101) device-relevant information of a surrounding device around the location of the electronic device comprises:
when detecting that the location of the electronic device goes beyond a first preset location range, detecting the device-relevant information of the surrounding device around the location of the electronic device; or
when detecting that a distance between the electronic device and a second preset device exceeds a first preset distance threshold, detecting the device-relevant information of the surrounding device around the location of the electronic device; or
when detecting that screen-unlocking information input by a user does not match preset screen-unlocking reference information, detecting the device-relevant information of the surrounding device around the location of the electronic device; or
when receiving a shut-down instruction, detecting the device-relevant information of the surrounding device around the location of electronic device.

3. The method according to claim 1, wherein the detecting (102) the device-relevant information of the surrounding device around the location of the electronic device comprises:
continuously detecting the device-relevant information of the surrounding device around the location of the electronic device in a preset detecting period.

4. The method according to claim 3, wherein the sending the detected device-relevant information of the surrounding device to a first preset device as object finding information comprises:
sending the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

5. The method according to any one of claims 1 to 4, wherein the sending the detected device-relevant information of the surrounding device to a first preset device as object finding information comprises:
when detecting a preset reporting trigger event, sending the detected device-relevant information of the surrounding device to the first preset device as the object finding information,

6. The method according to claim 5, wherein when detecting a preset reporting trigger event, said sending the detected device-relevant information of the surrounding device to the first preset device as the object finding information comprises:
when detecting that a self-location goes beyond a second preset location range, sending the detected device-relevant information of the surrounding device to the first preset device as the object finding information; or
when detecting that a distance between the electronic device and a second preset device exceeds a second preset distance threshold, sending the detected device-relevant information of the surrounding device to the first preset device as the object finding information; or
when first device-relevant information is continuously detected within a preset time period, sending the first device-relevant information to the first preset device as the object finding information.

7. The method according to any one of claims 1 to 6, wherein when detecting that a preset loss event occurs, said detecting device-relevant information of a surrounding device around the location of the electronic device, comprises:
when receiving a flashing instruction, detecting the device-relevant information of the surrounding device around the location of the electronic device;
wherein after detecting the device-relevant information of the surrounding device around the location of the electronic device, the method further comprises:
sending the detected device-relevant information of the surrounding device and information indicating a stolen state of the electronic device to a server as flashing preserving information; and
after flashing is completed, obtaining the flashing preserving information from the server, and when determining that the flashing preserving information comprises the information indicating the stolen state of the electronic device, detecting the device-relevant information of the surrounding device around the location of the electronic device again;
wherein the sending the detected device-relevant information of the surrounding device to a first preset device as object finding information, comprises:
if both the device-relevant information of the surrounding device detected before the flashing and the device-relevant information of the surrounding device detected after the flashing comprise the same second device-relevant information, sending the second device-relevant information to the first preset device as the object finding information.

8. The method according to any one of claims 1 to 7, wherein the sending the detected device-relevant information of the surrounding device to a first preset device as object finding information comprises:
sending the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

9. The method according to any one of claims 1 to 8, wherein the device-relevant information of the surrounding device comprises one or more of:
a network identity of a wireless local area network established by the surrounding device, a MAC address of the surrounding device, a Bluetooth identity of the surrounding device, and a login-in account of an instant messaging application in the surrounding device.

10. An electronic device for providing object finding information, the electronic device being attachable onto an object to detect the occurrence of preset loss events, comprising:
a detecting module (510) configured to detect the occurrence of a preset loss event and to detect device-relevant information of a surrounding device around a location of the electronic device when it is detected that a preset loss event occurs; and
a sending module (520) configured to send the detected device-relevant information of the surrounding device to a first preset device as object finding information.

11. The electronic device according to claim 10, wherein the detecting module (510) is configured to:
when it is detected that the location of the electronic device goes beyond a first preset location range, detect the device-relevant information of the surrounding device around the location of the electronic device; or
when it is detected that a distance between the electronic device and a second preset device exceeds a first preset distance threshold, detect the device-relevant information of the surrounding device around the location of the electronic device; or
when it is detected that screen-unlocking information input by a user does not match preset screen-unlocking reference information, detect the device-relevant information of the surrounding device around the location of the electronic device; or
when a shut-down instruction is received, detect the device-relevant information of the surrounding device around the location of the electronic device;
wherein the detecting module (510) is configured to:
continuously detect the device-relevant information of the surrounding device around the location of the electronic device in a preset detecting period;
wherein the detecting module (510) is configured to, when a flashing instruction is received, detect the device-relevant information of the surrounding device around the location of the electronic device;
wherein the sending module is further configured to, after the device-relevant information of the surrounding device around the location of the electronic device is detected, send the detected device-relevant information of the surrounding device and information indicating a stolen state of the electronic device to a server as flashing preserving information;
wherein the detecting module is further configured to, after flashing is completed, obtain the flashing preserving information from the server, and when it is determined that the flashing preserving information comprises the information indicating the stolen state of the electronic device, detect the device-relevant information of the surrounding device around the location of the electronic device again; and
wherein the sending module is configured to, if both the device-relevant information of the surrounding device detected before the flashing and the device-relevant information of the surrounding device detected after the flashing comprise the same second device-relevant information, send the second device-relevant information to the first preset device as the object finding information.

12. The electronic device according to claim 11, wherein the sending module (520) is configured to:
send the device-relevant information of the surrounding device detected in the detecting period to a server as the object finding information, so that the server determines location information of the surrounding device according to the device-relevant information of the surrounding device, determines an object moving route according to the location information of the surrounding device and sends the object moving route to the first preset device.

13. The electronic device according to any one of claims 10 to 12, wherein the sending module (520) is configured to:
when a preset reporting trigger event is detected, send the detected device-relevant information of the surrounding device to the first preset device as the object finding information;
wherein the sending module (520) is configured to:
when it is detected that a self-location goes beyond a second preset location range, send the detected device-relevant information of the surrounding device to the first preset device as the object finding information; or
when it is detected that a distance between the electronic device and a second preset device exceeds a second preset distance threshold, send the detected device-relevant information of the surrounding device to the first preset device as the object finding information; or
when first device-relevant information is continuously detected within a preset time period, send the first device-relevant information to the first preset device as the object finding information;
wherein the sending module (520) is configured to:
send the detected device-relevant information of the surrounding device and information on detecting time to a server as the object finding information, so that the server determines location information of the surrounding device according to the device-relevant information of the surrounding device, obtains an image captured by a camera at a corresponding location and a corresponding time according to the location information and the information on the detecting time, and sends the image to the first preset device.

14. The electronic device according to any one of claims 10 to 13, wherein the device-relevant information of the surrounding device comprises one or more of:
a network identity of a wireless local area network established by the surrounding device, a MAC address of the surrounding device, a Bluetooth identity of the surrounding device, and a login-in account of an instant messaging application in the surrounding device.

15. A computer program including instructions for executing the steps of a method for providing object finding information according to any one of claims 1 to 9 when said program is run by a computer.

## Patentansprüche

1. Verfahren zum Bereitstellen von Informationen zum Auffinden eines Objekts, umfassend:
beim Erkennen durch eine elektronische Vorrichtung, die an einem Objekt angebracht ist und zur Erkennung des Auftretens voreingestellter Verlustereignisse verwendet wird, dass ein voreingestelltes Verlustereignis auftritt, Erkennen (101) vorrichtungsrelevanter Informationen einer umgebenden Vorrichtung um einen Ort der elektronischen Vorrichtung durch die elektronische Vorrichtung, und
Senden (102) der erkannten vorrichtungsrelevanten Informationen der umgebenden Vorrichtung durch die elektronische Vorrichtung an eine erste voreingestellte Vorrichtung als Informationen zum Auffinden eines Objekts.

2. Verfahren nach Anspruch 1, wobei die Erkennung (101) vorrichtungsrelevanter Informationen einer umgebenden Vorrichtung um den Ort der elektronischen Vorrichtung beim Erkennen, dass ein voreingestelltes Verlustereignis auftritt, umfasst:
beim Erkennen, dass der Ort der elektronischen Vorrichtung über einen ersten voreingestellten Ortsbereich hinausgeht, Erkennen der vorrichtungsrelevanten Informationen der umgebenden Vorrichtung um den Ort der elektronischen Vorrichtung, oder
beim Erkennen, dass ein Abstand zwischen der elektronischen Vorrichtung und einer zweiten voreingestellten Vorrichtung über einen ersten voreingestellten Abstandsgrenzwert hinausgeht, Erkennen der vorrichtungsrelevanten Informationen der umgebenden Vorrichtung um den Ort der elektronischen Vorrichtung, oder
beim Erkennen, dass eine Informationseingabe zum Entsperren der Anzeige durch einen Benutzer nicht mit den voreingestellten Referenzinformationen zum Entsperren der Anzeige übereinstimmt, Erkennen der vorrichtungsrelevanten Informationen der umgebenden Vorrichtung um den Ort der elektronischen Vorrichtung, oder
beim Empfangen einer Abschaltanweisung, Erkennen der vorrichtungsrelevanten Informationen der umgebenden Vorrichtung um den Ort der elektronischen Vorrichtung.

3. Verfahren nach Anspruch 1, wobei das Erkennen (102) der vorrichtungsrelevanten Informationen einer umgebenden Vorrichtung um den Ort der elektronischen Vorrichtung umfasst:
kontinuierliches Erkennen der vorrichtungsrelevanten Informationen der umgebenden Vorrichtung um den Ort der elektronischen Vorrichtung in einem voreingestellten Erkennungszeitraum.

4. Verfahren nach Anspruch 3, wobei das Senden der erkannten vorrichtungsrelevanten Informationen der umgebenden Vorrichtung an eine erste voreingestellte Vorrichtung als Informationen zum Auffinden eines Objekts umfasst:
Senden der vorrichtungsrelevanten Informationen der umgebenden Vorrichtung, die in dem Erkennungszeitraum erkannt wurden, an einen Server als Informationen zum Auffinden eines Objekts, so dass der Server Ortsinformationen der umgebenden Vorrichtung den vorrichtungsrelevanten Informationen der umgebenden Vorrichtung entsprechend bestimmt, eine Route für eine Objektbewegung einer Ortsinformation der umgebenden Vorrichtung entsprechend bestimmt und die Route für eine Objektbewegung an die erste voreingestellte Vorrichtung sendet.

5. Verfahren nach einem der Ansprüche 1 bis 4, wobei das Senden der erkannten vorrichtungsrelevanten Informationen der umgebenden Vorrichtung an eine erste voreingestellte Vorrichtung als Informationen zum Auffinden eines Objekts umfasst:
beim Erkennen eines voreingestellten Meldungsauslöseereignisses Senden der erkannten vorrichtungsrelevanten Informationen der umgebenden Vorrichtung als Informationen zum Auffinden eines Objekts an die erste voreingestellte Vorrichtung.

6. Verfahren nach Anspruch 5, wobei beim Erkennen eines voreingestellten Meldungsauslöseereignisses das Senden der erkannten vorrichtungsrelevanten Informationen der umgebenden Vorrichtung als Informationen zum Auffinden eines Objekts an die erste voreingestellte Vorrichtung umfasst:
beim Erkennen, dass ein eigener Ort über einen zweiten voreingestellten Ortsbereich hinausgeht, Senden der erkannten vorrichtungsrelevanten Informationen der umgebenden Vorrichtung als Informationen zum Auffinden eines Objekts an die erste voreingestellte Vorrichtung oder
beim Erkennen, dass ein Abstand zwischen der elektronischen Vorrichtung und einer zweiten voreingestellten Vorrichtung über einen ersten voreingestellten Abstandsgrenzwert hinausgeht, Senden der erkannten vorrichtungsrelevanten Informationen der umgebenden Vorrichtung als Informationen zum Auffinden eines Objekts an die erste voreingestellte Vorrichtung, oder
wenn erste vorrichtungsrelevante Informationen innerhalb eines voreingestellten Zeitraums kontinuierlich erkannt werden, Senden der ersten vorrichtungsrelevanten Informationen als Informationen zum Auffinden eines Objekts an die erste voreingestellte Vorrichtung.

7. Verfahren nach einem der Ansprüche 1 bis 6, wobei beim Erkennen, dass ein voreingestelltes Verlustereignis auftritt, das Erkennen vorrichtungsrelevanter Informationen einer umgebenden Vorrichtung um den Ort der elektronischen Vorrichtung, umfasst:
beim Empfang einer Flashing-Anweisung, Erkennen der vorrichtungsrelevanten Informationen der umgebenden Vorrichtung um den Ort der elektronischen Vorrichtung,
wobei das Verfahren nach dem Erkennen der vorrichtungsrelevanten Informationen der umgebenden Vorrichtung um den Ort der elektronischen Vorrichtung ferner umfasst:
Senden der erkannten vorrichtungsrelevanten Informationen der umgebenden Vorrichtung und Informationen, die einen gestohlenen Zustand der elektronischen Vorrichtung an einen Server als Informationen zum Erhalten des Flashens anzeigen, und
nach Abschluss des Flashens Abrufen der Informationen zum Erhalten des Flashens von dem Server, und beim Bestimmen, dass die Informationen zum Erhalten des Flashens die Informationen umfassen, die den gestohlenen Zustand der elektronischen Vorrichtung anzeigen, erneutes Erkennen der vorrichtungsrelevanten Informationen der umgebenden Vorrichtung um den Ort der elektronischen Vorrichtung,
wobei das Senden der erkannten vorrichtungsrelevanten Informationen der umgebenden Vorrichtung an eine erste voreingestellte Vorrichtung als Informationen zum Auffinden eines Objekts umfasst:
wenn sowohl die vorrichtungsrelevanten Informationen der umgebenden Vorrichtung, die vor dem Flashen erkannt wurden, als auch die vorrichtungsrelevanten Informationen der umgebenden Vorrichtung, die nach dem Flashen erkannt wurden, dieselben zweiten vorrichtungsrelevanten Informationen umfassen, Senden der zweiten vorrichtungsrelevanten Informationen als die Informationen zum Auffinden eines Objekts an die erste voreingestellte Vorrichtung.

8. Verfahren nach einem der Ansprüche 1 bis 7, wobei das Senden der erkannten vorrichtungsrelevanten Informationen der umgebenden Vorrichtung an eine erste voreingestellte Vorrichtung als Informationen zum Auffinden eines Objekts umfasst:
Senden der erkannten vorrichtungsrelevanten Informationen und Informationen zum Erkennungszeitpunkt an einen Server als Informationen zum Auffinden eines Objekts, so dass der Server Ortsinformationen der umgebenden Vorrichtung den vorrichtungsrelevanten Informationen der umgebenden Vorrichtung entsprechend bestimmt, ein Bild erfasst, das von einer Kamera an einem entsprechenden Ort und zu einem entsprechenden Zeitpunkt den Ortsinformationen und Informationen zur Erkennungszeit entsprechend aufgenommen wurde, und das Bild an die erste voreingestellte Vorrichtung sendet.

9. Verfahren nach einem der Ansprüche 1 bis 8, wobei die vorrichtungsrelevanten Informationen der umgebenden Vorrichtung eines oder mehrere der folgenden Elemente umfassen:
eine Netzwerkidentität eines drahtlosen Local Area Network, eingerichtet durch die umgebende Vorrichtung, eine MAC-Adresse der umgebenden Vorrichtung, eine Bluetooth-Identität der umgebenden Vorrichtung und ein Login-Ein-Konto einer Sofortnachrichtenanwendung in der umgebenden Vorrichtung.

10. Elektronische Vorrichtung zum Bereitstellen von Informationen zum Auffinden eines Objekts, wobei die elektronische Vorrichtung an einem Objekt angebracht werden kann, um das Auftreten voreingestellter Verlustereignisse zu erkennen, umfassend:
ein Erkennungsmodul (510), das zum Erkennen des Auftretens eines voreingestellten Verlustereignisses und zum Erkennen vorrichtungsrelevanter Informationen einer umgebenden Vorrichtung um einen Ort der elektronischen Vorrichtung, wenn erkannt wird, dass ein voreingestelltes Verlustereignis auftritt, konfiguriert ist und
ein Sendemodul (520), das dazu konfiguriert ist, die erkannten vorrichtungsrelevanten Informationen der umgebenden Vorrichtung als Informationen zum Auffinden eines Objekts durch die elektronische Vorrichtung an eine erste voreingestellte Vorrichtung zu senden.

11. Elektronische Vorrichtung nach Anspruch 10, wobei das Erkennungsmodul (510) konfiguriert ist, um:
beim Erkennen, dass der Ort der elektronischen Vorrichtung über einen ersten voreingestellten Ortsbereich hinausgeht, die vorrichtungsrelevanten Informationen der umgebenden Vorrichtung um den Ort der elektronischen Vorrichtung zu erkennen, oder
beim Erkennen, dass ein Abstand zwischen der elektronischen Vorrichtung und einer zweiten voreingestellten Vorrichtung über einen ersten voreingestellten Abstandsgrenzwert hinausgeht, die vorrichtungsrelevanten Informationen der umgebenden Vorrichtung um den Ort der elektronischen Vorrichtung zu erkennen, oder
beim Erkennen, dass eine Informationseingabe zum Entsperren der Anzeige durch einen Benutzer nicht mit den voreingestellten Referenzinformationen zum Entsperren der Anzeige übereinstimmt, die vorrichtungsrelevanten Informationen der umgebenden Vorrichtung um den Ort der elektronischen Vorrichtung zu erkennen, oder
beim Empfangen einer Abschaltanweisung, die vorrichtungsrelevanten Informationen der umgebenden Vorrichtung um den Ort der elektronischen Vorrichtung zu erkennen,
wobei das Erkennungsmodul (510) konfiguriert ist, um:
kontinuierlich die vorrichtungsrelevanten Informationen der umgebenden Vorrichtung um den Ort der elektronischen Vorrichtung in einem voreingestellten Erkennungszeitraum zu erkennen,
wobei das Erkennungsmodul (510) konfiguriert ist, beim Empfangen einer Flashing-Anweisung die vorrichtungsrelevanten Informationen der umgebenden Vorrichtung um den Ort der elektronischen Vorrichtung zu erkennen,
wobei das Sendemodul ferner konfiguriert ist, nach Erkennen der vorrichtungsrelevanten Informationen der umgebenden Vorrichtung um den Ort der elektronischen Vorrichtung die erkannten vorrichtungsrelevanten Informationen der umgebenden Vorrichtung und Informationen, die einen gestohlenen Status der elektronischen Vorrichtung anzeigen, als Informationen zum Erhalten des Flashens an einen Server zu senden,
wobei das Erkennungsmodul ferner konfiguriert ist, nach Abschluss des Flashens die Informationen zum Erhalten des Flashens von dem Server abzurufen, und wenn bestimmt wird, dass die Informationen zum Erhalten des Flashens die Informationen umfassen, die den gestohlenen Zustand der elektronischen Vorrichtung anzeigen, erneut die vorrichtungsrelevanten Informationen der umgebenden Vorrichtung um den Ort der elektronischen Vorrichtung zu erkennen, und
wobei das Sendemodul konfiguriert ist, wenn sowohl die vorrichtungsrelevanten Informationen der umgebenden Vorrichtung die vor dem Flashen erkannt wurde, und die vorrichtungsrelevanten Informationen der umgebenden Vorrichtung, die nach dem Flashen erkannt wurden, dieselben zweiten vorrichtungsrelevanten Informationen umfassen, die zweiten vorrichtungsrelevanten Informationen als die Informationen zum Auffinden eines Objekts an die erste voreingestellte Vorrichtung zu senden.

12. Elektronische Vorrichtung nach Anspruch 11, wobei das Sendemodul (520) konfiguriert ist, um:
die vorrichtungsrelevanten Informationen der umgebenden Vorrichtung, die in dem Erkennungszeitraum erkannt wurden, als Informationen zum Auffinden eines Objekts an einen Server zu senden, sodass der Server Ortsinformationen der umgebenden Vorrichtung den vorrichtungsrelevanten Informationen der umgebenden Vorrichtung entsprechend bestimmt, eine Route für eine Objektbewegung von Ortsinformationen der umgebenden Vorrichtung entsprechend bestimmt und die Route für eine Objektbewegung an die erste voreingestellte Vorrichtung sendet.

13. Elektronische Vorrichtung nach einem der Ansprüche 10 bis 12, wobei das Sendemodul (520) konfiguriert ist, um:
beim Erkennen eines voreingestellten Meldungsauslöseereignisses, die erkannten vorrichtungsrelevanten Informationen der umgebenden Vorrichtung als Informationen zum Auffinden eines Objekts an die erste voreingestellte Vorrichtung zu senden,
wobei das Sendemodul (520) konfiguriert ist, um:
beim Erkennen, dass ein eigener Ort über einen zweiten voreingestellten Ortsbereich hinausgeht, die erkannten vorrichtungsrelevanten Informationen der umgebenden Vorrichtung als Informationen an die erste voreingestellte Vorrichtung zum Auffinden eines Objekts zu senden oder
beim Erkennen, dass ein Abstand zwischen der elektronischen Vorrichtung und einer zweiten voreingestellten Vorrichtung über einen ersten voreingestellten Abstandsgrenzwert hinausgeht, die erkannten vorrichtungsrelevanten Informationen der umgebenden Vorrichtung als Informationen zum Auffinden eines Objekts an die erste voreingestellte Vorrichtung zu senden, oder
wenn erste vorrichtungsrelevante Informationen kontinuierlich innerhalb eines voreingestellten Zeitraums erkannt werden, die ersten vorrichtungsrelevanten Informationen als Informationen zum Auffinden eines Objekts an die erste voreingestellte Vorrichtung zu senden,
wobei das Sendemodul (520) konfiguriert ist, um:
die erkannten vorrichtungsrelevanten Informationen und Informationen zum Erkennungszeitraum als Informationen zum Auffinden eines Objekts an einen Server zu senden, so dass der Server Ortsinformationen der umgebenden Vorrichtung den vorrichtungsrelevanten Informationen der umgebenden Vorrichtung entsprechend bestimmt, ein Bild erfasst, das von einer Kamera an einem entsprechenden Ort und einem entsprechenden Zeitpunkt den Ortsinformationen und Informationen zur Erkennungszeit entsprechend aufgenommen wurde, und das Bild an die erste voreingestellte Vorrichtung sendet.

14. Elektronische Vorrichtung nach einem der Ansprüche 10 bis 13, wobei die vorrichtungsrelevanten Informationen der umgebenden Vorrichtung eines oder mehrere der folgenden Elemente umfasst:
eine Netzwerkidentität eines drahtlosen Local Area Network, eingerichtet durch die umgebende Vorrichtung, eine MAC-Adresse der umgebenden Vorrichtung, eine Bluetooth-Identität der umgebenden Vorrichtung und ein Login-Ein-Konto einer Sofortnachrichtenanwendung in der umgebenden Vorrichtung.

15. Computerprogramm, umfassend Anweisungen zur Ausführung der Schritte eines Verfahrens zur Bereitstellung von Informationen zum Finden eines Objekts nach einem der Ansprüche 1 bis 9, wenn das Programm durch einen Computer ausgeführt wird.

## Revendications

1. Procédé pour fournir des informations de recherche d'objet, comprenant les étapes suivantes :
lors de la détection, par un dispositif électronique attaché à un objet et utilisé pour détecter la survenance d'événements prédéfinis de perte, de ce qu'un événement prédéfini de perte est survenu, détection (101) au moyen du dispositif électronique des informations de dispositif électronique se rapportant à un dispositif voisin aux alentours d'un emplacement du dispositif électronique ; et
envoi (102) au moyen du dispositif électronique les informations détectées de dispositif se rapportant au dispositif voisin, à un premier dispositif prédéfini, en tant qu'informations de recherche d'objet.

2. Procédé selon la revendication 1, dans lequel lors de la détection de ce qu'un événement prédéfini de perte est survenu, ladite détection (101) d'informations de dispositif se rapportant à un dispositif voisin aux alentours de l'emplacement du dispositif électronique comprend les étapes suivantes :
lors de la détection de ce que l'emplacement du dispositif électronique va au-delà d'une première plage d'emplacement prédéfinie, détection des informations de dispositif se rapportant au dispositif voisin aux alentours de l'emplacement du dispositif électronique ; ou
lors de la détection de ce qu'une distance entre le dispositif électronique et un second dispositif prédéfini est supérieure à un premier seuil de distance prédéfini, détection des informations de dispositif se rapportant au dispositif voisin aux alentours de l'emplacement du dispositif électronique ; ou
lors de la détection de ce que des informations de déverrouillage d'écran introduites par un utilisateur ne concordent pas avec des informations de déverrouillage d'écran de référence prédéfinies, détection des informations de dispositif se rapportant au dispositif voisin aux alentours de l'emplacement du dispositif électronique ; ou
lors de la réception d'une instruction d'arrêt, détection des informations de dispositif se rapportant au dispositif voisin aux alentours de l'emplacement du dispositif électronique.

3. Procédé selon la revendication 1, dans lequel la détection (102) des informations de dispositif se rapportant au dispositif voisin aux alentours de l'emplacement du dispositif électronique comprend l'étape suivante :
détection en continu des informations de dispositif se rapportant au dispositif voisin aux alentours de l'emplacement du dispositif électronique au cours d'une période de détection prédéfinie.

4. Procédé selon la revendication 3, dans lequel l'envoi des informations détectées de dispositif se rapportant au dispositif voisin aux alentours, à un premier dispositif prédéfini, en tant qu'informations de recherche d'objet comprend l'étape suivante :
envoi des informations de dispositif se rapportant au dispositif voisin aux alentours, détectées au cours de la période de détection, à un serveur, en tant qu'informations de recherche d'objet, de manière à ce que le serveur détermine des informations d'emplacement du dispositif voisin aux alentours, en fonction des informations de dispositif se rapportant au dispositif voisin aux alentours, détermine un itinéraire de déplacement d'objet en fonction des informations d'emplacement du dispositif voisin aux alentours et envoie l'itinéraire de déplacement d'objet au premier dispositif prédéfini.

5. Procédé selon l'une quelconque des revendications 1 à 4, dans lequel l'envoi des informations détectées de dispositif se rapportant au dispositif voisin aux alentours, à un premier dispositif prédéfini, en tant qu'informations de recherche d'objet comprend l'étape suivante :
lors de la détection d'un événement déclencheur de signalement prédéfini, envoi des informations détectées de dispositif se rapportant au dispositif voisin aux alentours, au premier dispositif prédéfini, en tant qu'informations de recherche d'objet.

6. Procédé selon la revendication 5, dans lequel lors de la détection d'un événement déclencheur de signalement prédéfini, ledit envoi des informations détectées de dispositif se rapportant au dispositif voisin aux alentours, au premier dispositif prédéfini, en tant qu'informations de recherche d'objet comprend les étapes suivantes :
lors de la détection de ce qu'une autolocalisation va au-delà d'une seconde plage d'emplacement prédéfinie, envoi des informations détectées de dispositif se rapportant au dispositif voisin aux alentours, au premier dispositif prédéfini, en tant qu'informations de recherche d'objet ; ou
lors de la détection de ce qu'une distance entre le dispositif électronique et un second dispositif prédéfini est supérieure à un second seuil de distance prédéfini, envoi des informations détectées de dispositif se rapportant au dispositif voisin aux alentours, au premier dispositif prédéfini, en tant qu'informations de recherche d'objet ; ou
lorsque des premières informations de dispositif sont détectées en continu à l'intérieur d'une période de temps prédéfinie, envoi des premières informations de dispositif au premier dispositif prédéfini, en tant qu'informations de recherche d'objet.

7. Procédé selon l'une quelconque des revendications 1 à 6, dans lequel lors de la détection de ce qu'un événement prédéfini de perte est survenu, ladite détection d'informations de dispositif se rapportant à un dispositif voisin aux alentours de l'emplacement du dispositif électronique comprend les étapes suivantes :
lors de la réception d'une instruction clignotante, détection des informations de dispositif se rapportant au dispositif voisin aux alentours de l'emplacement du dispositif électronique ;
dans lequel après avoir détecté les informations de dispositif se rapportant au dispositif voisin aux alentours de l'emplacement du dispositif électronique, le procédé comprend en outre les étapes suivantes :
envoi des informations détectées de dispositif se rapportant au dispositif voisin aux alentours et des informations indiquant un état volé du dispositif électronique, à un serveur, sous la forme d'informations clignotantes de préservation ; et
après que le clignotement s'est achevé, obtention des informations clignotantes de préservation auprès du serveur, et lors de la détermination de ce que les informations clignotantes de préservation comprennent les informations indiquant l'état volé du dispositif électronique, détection de nouveau des informations de dispositif se rapportant au dispositif voisin aux alentours de l'emplacement du dispositif électronique ;
dans lequel l'envoi des informations détectées de dispositif se rapportant au dispositif voisin, à un premier dispositif prédéfini, en tant qu'informations de recherche d'objet comprend l'étape suivante :
si à la fois les informations de dispositif se rapportant au dispositif voisin, détectées avant le clignotement et les informations de dispositif se rapportant au dispositif voisin, détectées après le clignotement comprennent les mêmes secondes informations de dispositif, envoi des secondes informations de dispositif au premier dispositif prédéfini, en tant qu'informations de recherche d'objet.

8. Procédé selon l'une quelconque des revendications 1 à 7, dans lequel l'envoi des informations détectées de dispositif se rapportant au dispositif voisin, à un premier dispositif prédéfini, en tant qu'informations de recherche d'objet comprend l'étape suivante :
envoi des informations détectées de dispositif se rapportant au dispositif voisin et des informations sur un moment de détection, à un serveur, en tant qu'informations de recherche d'objet, de manière à ce que le serveur détermine des informations d'emplacement du dispositif voisin, en fonction des informations de dispositif se rapportant au dispositif voisin, obtienne une image capturée par un dispositif de prise de vues à un emplacement correspondant et à un moment correspondant en fonction des informations d'emplacement et des informations sur le moment de détection, et envoie l'image au premier dispositif prédéfini.

9. Procédé selon l'une quelconque des revendications 1 à 8, dans lequel les informations de dispositif se rapportant au dispositif voisin comprennent une ou plusieurs des informations suivantes :
une identité de réseau d'un réseau local sans fil établie par le dispositif voisin, une adresse MAC du dispositif voisin, une identité Bluetooth du dispositif voisin, et un compte de connexion d'une application de messagerie instantanée dans le dispositif voisin.

10. Dispositif électronique destiné à fournir des informations de recherche d'objet, le dispositif électronique étant apte à être attaché à un objet pour détecter la survenance d'événements prédéfinis de perte, comprenant :
un module de détection (510) configuré pour détecter la survenance d'un événement prédéfini de perte et pour détecter des informations de dispositif se rapportant à un dispositif voisin aux alentours d'un emplacement du dispositif électronique, lorsque la survenance d'un événement prédéfini de perte est détectée ; et
un module d'envoi (520) configuré pour envoyer les informations détectées de dispositif se rapportant au dispositif voisin, à un premier dispositif prédéfini, en tant qu'informations de recherche d'objet.

11. Dispositif électronique selon la revendication 10, dans lequel le module de détection (510) est configuré pour :
lorsque l'emplacement du dispositif électronique est détecté comme allant au-delà d'une première plage d'emplacement prédéfinie, détecter les informations de dispositif se rapportant au dispositif voisin aux alentours de l'emplacement du dispositif électronique ; ou
lorsqu'une distance entre le dispositif électronique et un second dispositif prédéfini est détectée comme étant supérieure à un premier seuil de distance prédéfini, détecter les informations de dispositif se rapportant au dispositif voisin aux alentours de l'emplacement du dispositif électronique ; ou
lorsque des informations de déverrouillage d'écran introduites par un utilisateur sont détectées comme ne concordant pas avec des informations de déverrouillage d'écran de référence prédéfinies, détecter les informations de dispositif se rapportant au dispositif voisin aux alentours de l'emplacement du dispositif électronique ; ou
lorsqu'une instruction d'arrêt est reçue, détecter les informations de dispositif se rapportant au dispositif voisin aux alentours de l'emplacement du dispositif électronique ;
dans lequel le module de détection (510) est conçu pour :
détecter en continu les informations de dispositif se rapportant au dispositif voisin aux alentours de l'emplacement du dispositif électronique au cours d'une période de détection prédéfinie ;
dans lequel le module de détection (510) est configuré pour, lorsqu'une instruction clignotante est reçue, détecter les informations de dispositif se rapportant au dispositif voisin aux alentours de l'emplacement du dispositif électronique ;
dans lequel le module d'envoi est configuré en outre pour, après que les informations de dispositif se rapportant au dispositif voisin aux alentours de l'emplacement du dispositif électronique ont été détectées, envoyer les informations détectées de dispositif se rapportant au dispositif voisin et des informations indiquant un état volé du dispositif électronique, à un serveur, sous la forme d'informations clignotantes de préservation ;
dans lequel le module de détection est configuré en outre pour, après que le clignotement s'est achevé, obtenir les informations clignotantes de préservation auprès du serveur, et lorsqu'il est déterminé que les informations clignotantes de préservation comprennent les informations indiquant l'état volé du dispositif électronique, détecter de nouveau les informations de dispositif se rapportant au dispositif voisin aux alentours de l'emplacement du dispositif électronique ; et
dans lequel le module d'envoi est configuré pour, si à la fois les informations de dispositif se rapportant au dispositif voisin, détectées avant le clignotement et les informations de dispositif se rapportant au dispositif voisin, détectées après le clignotement comprennent les mêmes secondes informations de dispositif, envoyer les secondes informations de dispositif au premier dispositif prédéfini, en tant qu'informations de recherche d'objet.

12. Dispositif électronique selon la revendication 11, dans lequel le module d'envoi (520) est configuré pour :
envoyer les informations de dispositif se rapportant au dispositif voisin, détectées au cours de la période de détection, à un serveur, en tant qu'informations de recherche d'objet, de manière à ce que le serveur détermine des informations d'emplacement du dispositif voisin, en fonction des informations de dispositif se rapportant au dispositif voisin, détermine un itinéraire de déplacement d'objet en fonction des informations d'emplacement du dispositif voisin et envoie l'itinéraire de déplacement d'objet au premier dispositif prédéfini.

13. Dispositif électronique selon l'une quelconque des revendications 10 à 12, dans lequel le module d'envoi (520) est configuré pour :
lorsqu'un événement déclencheur de signalement prédéfini est détecté, envoyer les informations détectées de dispositif se rapportant au dispositif voisin, au premier dispositif prédéfini, en tant qu'informations de recherche d'objet ;
dans lequel le module d'envoi (520) est configuré pour :
lors de la détection de ce qu'une autolocalisation va au-delà d'une seconde plage d'emplacement prédéfinie, envoyer les informations détectées de dispositif se rapportant au dispositif voisin, au premier dispositif prédéfini, en tant qu'informations de recherche d'objet ; ou
lors de la détection de ce qu'une distance entre le dispositif électronique et un second dispositif prédéfini est supérieure à un second seuil de distance prédéfini, envoyer les informations détectées de dispositif se rapportant au dispositif voisin, au premier dispositif prédéfini, en tant qu'informations de recherche d'objet ; ou
lorsque des premières informations de dispositif sont détectées en continu à l'intérieur d'une période de temps prédéfinie, envoyer les premières informations de dispositif au premier dispositif prédéfini, en tant qu'informations de recherche d'objet ;
dans lequel le module d'envoi (520) est configuré pour :
envoyer les informations détectées de dispositif se rapportant au dispositif voisin et des informations sur un moment de détection, à un serveur, en tant qu'informations de recherche d'objet, de manière que le serveur détermine des informations d'emplacement du dispositif voisin, en fonction des informations de dispositif se rapportant au dispositif voisin, obtienne une image capturée par un dispositif de prise de vues à un emplacement correspondant et à un moment correspondant, en fonction des informations d'emplacement et des informations sur le moment de détection, et envoie l'image au premier dispositif prédéfini.

14. Dispositif électronique selon l'une quelconque des revendications 10 à 13, dans lequel les informations de dispositif se rapportant au dispositif voisin comprennent une ou plusieurs des informations suivantes :
une identité de réseau d'un réseau local sans fil établie par le dispositif voisin, une adresse MAC du dispositif voisin, une identité Bluetooth du dispositif voisin, et un compte de connexion d'une application de messagerie instantanée dans le dispositif voisin.

15. Programme informatique comportant des instructions destinées à exécuter les étapes d'un procédé pour fournir des informations de recherche d'objet selon l'une quelconque des revendications 1 à 9, lorsque ledit programme est exécuté par un ordinateur.
